# EUROPÄISCHE PATENTSCHRIFT

(11) **EP 3 369 460 B1**
(45) Veröffentlichungstag und Bekanntmachung des Hinweises auf die Patenterteilung: **11.09.2019**
(21) Anmeldenummer: 18159648.7
(22) Anmeldetag: 02.03.2018
(51) Int. Cl.: A62B 35/00, F16B 45/02

(54) **GLEITELEMENT FÜR SICHERHEITSSYSTEME UND SICHERHEITSSYSTEM**
SLIDING ELEMENT FOR SECURITY SYSTEMS AND SECURITY SYSTEM
ÉLÉMENT COULISSANT POUR SYSTÈMES DE SÉCURITÉ ET SYSTÈME DE SÉCURITÉ

(30) Priorität: 03.03.2017 IT 201700024039
(43) Veröffentlichungstag der Anmeldung: 05.09.2018
(73) Patentinhaber: Rotho Blaas srl GmbH, 39040 Cortaccia (IT)
(72) Erfinder: Röggla, Jürgen, 39040 Cortaccia (IT); Weiss, Valentin, 39040 Cortaccia (IT)
(74) Vertreter: Ausserer, Anton

(56) Entgegenhaltungen:
- EP-A1- 1 188 459
- DE-U1- 29 811 100
- DE-U1-202015 102 784
- GB-A- 2 370 312
- GB-A- 2 388 148

## Beschreibung

Die vorliegende Erfindung betrifft ein Gleitelement für Sicherungssysteme, insbesondere für Absturzsicherungen, Fallschutzsysteme und ähnliche Sicherheitssysteme.

Es ist eine Vielzahl von Gleitelementen für Sicherungssysteme und ähnliches bekannt. Aus der EP 1 716 889 ist ein Gleitelement für eine Sicherheitsanlage insbesondere für Absturzsicherungen oder Sicherheitsschienen für den Fallschutz von Personen bekannt. Dieses Gleitelement weist ein Gehäuse auf, das ein Seil über eine Führungsöffnung umschließt, wobei diese Führungsöffnung in axialer Richtung einen axialen Spalt aufweist. Das Gehäuse ist durch zwei zueinander um eine zur Führungsöffnung senkrechte Achse schwenkbare Teile gebildet.

Wird das Gleitelement aufgrund eines Absturzes belastet, so wird die Last auf das Element entladen, um welchem sich die beiden Teile drehen.

Aus der AT 500 493 ist eine Vorrichtung für die Befestigung von persönlichen Schutzelementen an einer Absturzsicherung mit einer beweglichen Anschlagstelle bekannt, die durch ein Gleitelement gebildet ist, die eine Führungsöffnung für die Absturzsicherung mit einem kontinuierlichen Längsspalt für den Durchtritt von Zwischenankern der Absturzsicherung aufweist, die zwischen zwei Außenankern gespannt ist. Das Gleitelement ist durch zwei Teile gebildet, die durch eine durch die Achse der Führungsöffnung gehende Ebene geteilt und zueinander verstellbar sind.

Auch in diesem Fall wird bei Ausübung einer Kraft auf das Gleitelement aufgrund eines Absturzes die Kraft auf das Anschlagelement oder an den Spaltkanten entladen

Die GB 2 370 312 beschreibt eine Einhakvorrichtung für Absturzsicherungen mit einem Backenabschnitt um an einer Absturzsicherung angehängt zu werden. Diese Vorrichtung erlaubt nur eine begrenzte Öffnung der Backe. Überdies weist das die Öffnung versperrende Element eine begrenzte Dicke auf. Die GB 2 388 148 A beschreibt eine weitere Einhakvorrichtung ähnlich der Vorrichtung die in der GB 2 370 312 beschrieben wurde.

Auch die DE 298 11 100 beschreibt eine Einhakvorrichtung. Diese Vorrichtung muss verschoben werden, um die Einbringung auf der Absturzsicherung zu ermöglichen. Auch in diesem Fall bleibt die Öffnung für die Einbringung in der Absturzsicherung klein und dies behindert eine rasche und sichere Benutzung der Vorrichtung.

Die Aufgabe der vorliegenden Erfindung ist die Herstellung eines Gleitelementes das die genannten Probleme in einer das genannte Gleitelement umfassenden Einrichtung löst.

Diese Aufgabe wird durch ein Gleitelement gemäß Anspruch 1 gelöst. Weitere vorteilhafte Ausgestaltungen sind in den Unteransprüchen angegeben.

Jedes Teil weist vorzugsweise eine Ausnehmung auf, die im Wesentlichen zur Achse der Führungsöffnung senkrecht ist.

Unter Ausnehmung versteht man durchgehendes Loch. In der gekoppelten Stellung sind die Ausnehmungen der beiden Teile der Art überlappend, dass ein Karabiner aufgenommen werden kann, durch den ein Benutzer verbunden werden kann, wobei der Karabiner auf diese Weise die ungewollte Öffnung des Gleitelementes vermeidet, während es vom Benutzer verwendet wird und die überlappenden Ausnehmungen zwischen dem Bolzen und dem Spalt in geschlossener Stellung angeordnet sind, wobei die Einbuchtung durch eine nach unten geneigte Fläche am Außenrand oder eine Nut gebildet ist. Auf diese Weise bilden die beiden Oberflächen der Teile einen Formschluss. Dieser Formschluss zwischen den beiden Teilen erhöht die Festigkeit des erfindungsgemäßen Elementes, insbesondere die Formfestigkeit des erfindungsgemäßen Elementes. Dadurch, dass überdies der Formschluss in der Basis des Gleitelementes ausgeführt ist, kann der Schwerpunkt in Richtung der Absturzsicherung verlagert werden.

Dadurch, dass überdies der Bolzen unterhalb der überlappenden Ausnehmungen in geschlossener Stellung angeordnet ist, können die beiden Teile weiter geöffnet werden, wobei so die Einführung an der Absturzsicherung und/oder der Sicherheitsschiene oder ähnlichem leichter erfolgen kann .

In einer bevorzugten Ausführungsform ist die Führungsöffnung zwischen den beiden Teilen des erfindungsgemäßen Elementes exzentrisch. Diese Exzentrizität erlaubt eine bessere Verschiebung auf der Absturzsicherung und erlaubt überdies die belastete Dicke bei einem Absturz oder einer Beanspruchung der die Öffnung bildenden Teile zu erhöhen. Insbesondere ist die Exzentrizität vorteilhaft, wenn die Öffnungsachse um 1 mm in vertikaler Richtung nach unten in Richtung des Formschlusses und um 2 mm in horizontaler Richtung zum Spalt hin verschoben ist.

Diese Ausbildung in Kombination mit den geneigten Flächen und den Ausnehmungen, die zwischen dem Bolzen, um den sich die beiden Teile drehen, und dem Spalt/Führungsöffnung liegen, erlaubt die Verschiebung des Schwerpunktes nach oben zur Absturzsicherung hin.

Vorteilhafterweise weisen die geneigten Flächen eine Breite mindestens entsprechend einem Drittel der Breite des Gleitelementes im Kupplungsbereich auf, wobei somit eine größere Festigkeit sichergestellt wird.

Überdies ist die Neigung der geneigten Fläche größer als 5° gegenüber der horizontalen Ebene der Achse der Führungsöffnung.

Der Spalt wird verwendet, um Zwischenhalter zu überwinden, die das Seil und/oder den Strang oder Schiene tragen, die an der Absturzsicherung oder ähnlichen angeordnet sind.

Ist Zwischen dem ersten Teil und dem zweiten Teil auf der Drehachse auf einem Bolzen eine Rückholfeder angeordnet, die die beiden Teile der Art belastet, dass der Formschluss gespannt wird. Möchte man die Verbindung der beiden Teile des Gleitelementes lösen, muss eine im Wesentlichen zur Achse der Führungsöffnung parallele Kraft ausgeübt werden. Der Bolzen wirkt sowohl als Drehachse als auch überdies als Anschlag, wobei nur eine begrenzte Beabstandung zwischen den beiden Teilen erlaubt wird und diese immer verbunden gehalten werden, wobei die gegenseitige Drehbewegung erlaubt wird.

Vorteilhafterweise können mehrere Flächen vorgesehen sein, die einen Formschluss zwischen den beiden Teilen erlauben.

In einer vorteilhaften Ausführung mindestens eines der Teile des erfindungsgemäßen Gleitelementes weist eine Einbuchtung und das andere Teil mindestens einen mit der Einbuchtung formschlüssig durch eine zur Achse der Führungsöffnung parallele Verschiebung verbindbaren Vorsprung auf. Dieser Vorsprung und die Einbuchtung sind durch geneigte Flächen gebildet, die mindestens eine Neigung von 5° gegenüber der horizontalen Ebene der Achse der Führungsöffnung aufweisen.

In einer weiteren Ausführungsform kann der Formschluss mittels einer Nut hergestellt werden.

Weitere Merkmale und Einzelheiten von zwei bevorzugten und nicht begrenzenden Ausführungsformen gemäß der Erfindung eines hier erläuterten erfindungsgemäßen Gleitelemente werden in der folgenden Beschreibung und unter Bezug auf die beigefügten Figuren näher beschrieben. Es zeigen:
- Figur 1 ein Schaubild eines erfindungsgemäßen Gleitelementes in Kuppelstellung,
- Figur 2 ein Schaubild eines erfindungsgemäßen Gleitelementes in Kuppelstellung eingebracht an einer Absturzsicherung,

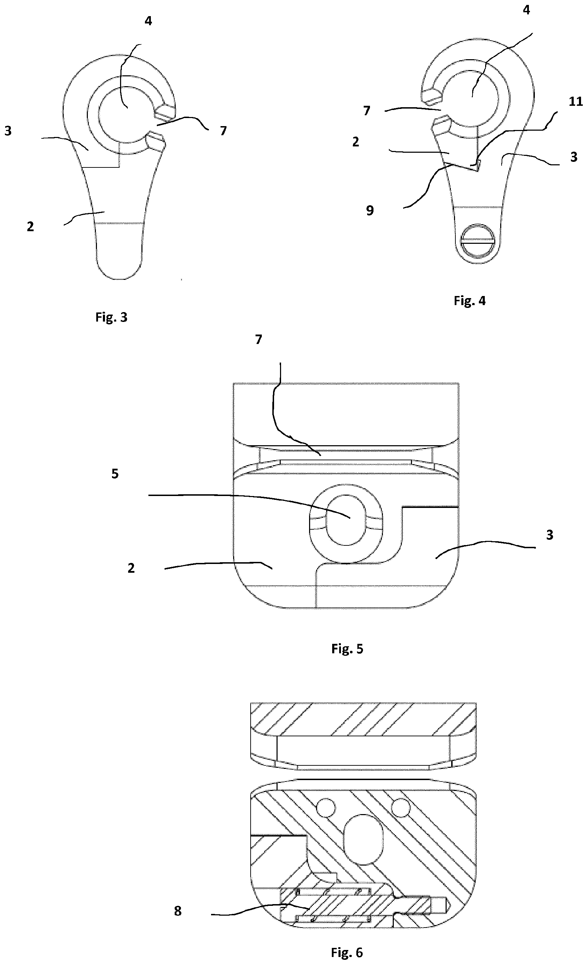

- Figur 3 eine Seitenansicht eines erfindungsgemäßen Gleitelementes Kuppelstellung,
- Figur 4 eine Seitenansicht eines erfindungsgemäßen Gleitelementes in Kuppelstellung,
- Figur 5 eine Stirnansicht eines erfindungsgemäßen Gleitelementes in Kuppelstellung,
- Figur 6 einen Schnitt aus Figur 5,

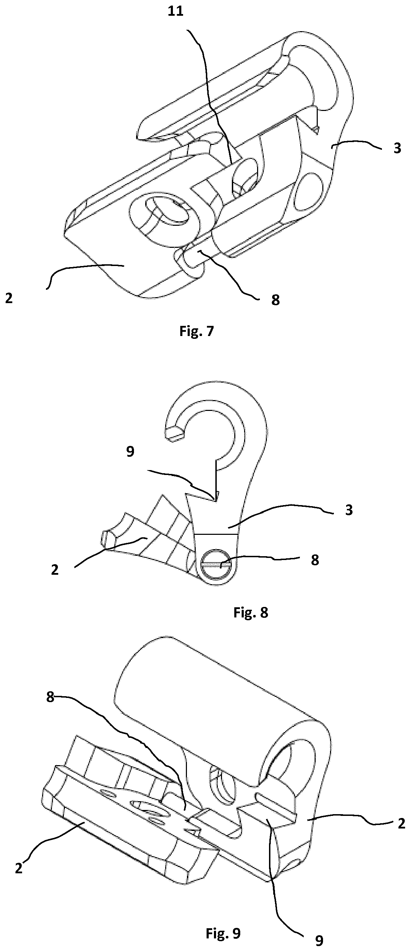

- Figur 7 ein Schaubild von unten eines erfindungsgemäßen Gleitelementes in offener Stellung,
- Figur 8 eine Seitenansicht eines erfindungsgemäßen Gleitelementes in offener Stellung,
- Figur 9 ein Schaubild von oben eines erfindungsgemäßen Gleitelementes in offener Stellung,

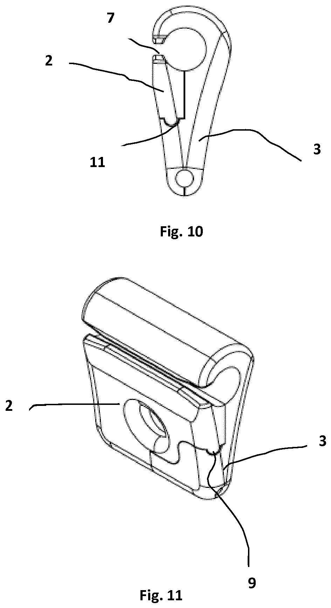

- Figur 10 eine Seitenansicht eines erfindungsgemäßen Gleitelementes in Kuppelstellung in einer weiteren Ausführungsform und,
- Figur 11 ein Schaubild von oben eines erfindungsgemäßen Gleitelementes Kuppelstellung in einer weiteren Ausführungsform.

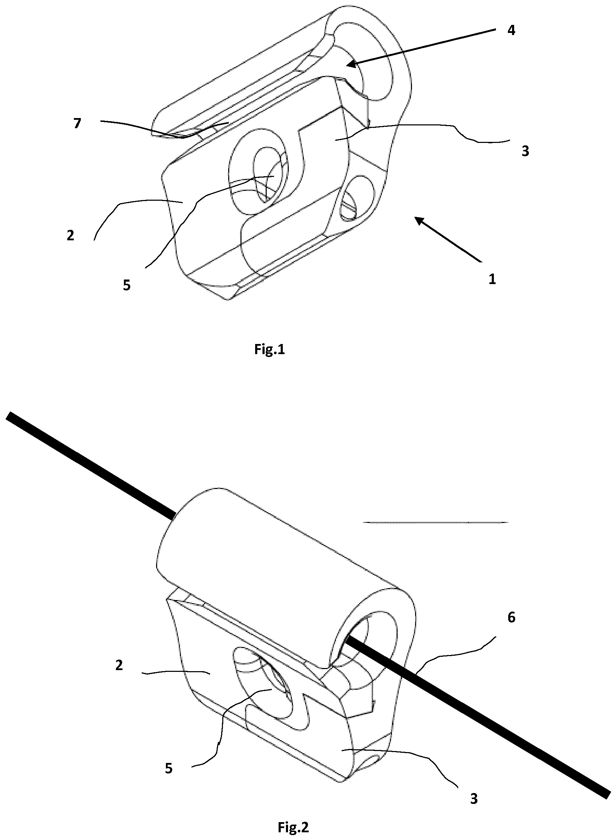

In Figur 1 ist mit der Bezugsziffer 1 ein Gleitelement in einer ersten Ausführungsform angegeben. Das erfindungsgemäße Gleitelement 1 ist doch zwei Teile 2, 3 gebildet. Diese beiden Teile bilden einen Führungsöffnung 4. In diese Führungsöffnung kann eine Absturzsicherung 6 oder eine Schiene oder ähnliches eingeführt werden. Die zwischen den beiden Teilen gebildete Führungsöffnung 4 weist einen Spalt 7 mit einer im Wesentlichen zur Führungsöffnung4 parallelen Erstreckung auf . Der Spalt 7 weist eine Breite auf, die kleiner ist als der Durchmesser der in der Führungsöffnung 4 aufgenommenen Absturzsicherung 6 oder Schiene oder ähnliches.

Die beiden Teile 2, 3 des Gleitelementes 1 sind zueinander gegenüber einer im Wesentlichen zur Achse der Führungsöffnung4 parallelen Achse um einen Gelenksbolzen schwenkbar und parallel zur Achse der Führungsöffnung 4 verschiebbar. Die Verbindung zwischen den beiden Teilen wird durch den Bolzen 8 hergestellt. Dieser Bolzen 8 wird durch die beiden Teile 2, 3 in zwei in den Teilen ausgenommenen und zueinander ausgerichteten Bohrungen mit den gekoppelten Teilen aufgenommen. Zwischen dem Bolzen 8 und dem Spalt in geschlossener Stellung bei den überlappenden Teilen sind in den beiden Teilen überlappende Ausnehmungen angeordnet.

Dieser Bolzen 8 erlaubt sowohl die Drehung als auch die zur Achse der Führungsöffnung 4 parallele Verschiebung.

Vorteilhafterweise ist ein Federelement bevorzugter Weise am Bolzen 8 angeordnet. Auf diese Art und Weise werden die Teile in Kuppelstellung gebracht. Will man die Kupplung öffnen, so muss eine Kraft in einer zur Achse der Öffnung 4 parallele Kraft ausgeübt werden. Vorteilhafterweise weist der Bolzen einen Endanschlag der Art auf, das die Beabstandung zwischen den beiden Teilen 2, 3 begrenzt wird. Mindestens eines der Teile 2, 3 des erfindungsgemäßen Gleitelementes 1 weist eine Einbuchtung 9 und das andere Teil mindestens einen mit der Einbuchtung 9 formschlüssig durch eine zur Achse der Führungsöffnung 4 parallele Verschiebung verbindbaren Vorsprung 11 auf. Dieser Vorsprung 11 und die Einbuchtung 9 sind durch geneigte Flächen gebildet, die mindestens eine Neigung von 5° gegenüber der horizontalen Ebene der Achse der Führungsöffnung aufweisen.

Vorteilhafterweise ist die Einbuchtung 9 durch eine nach unten geneigte Fläche am höchst gelegenen Außenrand gebildet. Auf diese Weise bilden die beiden Flächen der Teile einen Formschluss. Dieser Formschluss zwischen den beiden Teilen erhöht die Festigkeit des erfindungsgemäßen Elementes, erhöht insbesondere die Formfestigkeit des erfindungsgemäßen Elementes. Indem der Formschluss in der Basis des Gleitelementes hergestellt ist, kann der Schwerpunkt in Richtung der Absturzsicherung verschoben werden. Vorteilhafterweise weisen diese geneigten Flächen 9, 11 eine Breite von mindestens 1/3 der Gesamtbreite der beiden Teile der Vorrichtung in diesem Bereich auf, vorteilhafterweise 1/2 der Breite der beiden Teilen der Vorrichtung in diesem Bereich. Jedes der Teile 2, 3 des Gleitelementes 1 weist eine im Wesentlichen zur Achse der Führungsöffnung 4 senkrechte Ausnehmung 5 in der überlappenden Kuppelstellung derart auf, dass ein Karabiner aufgenommen werden kann, mittels dem der Benutzer verbunden wird.

Das Gleitelement 1 ist bevorzugter Weise in Stahl, insbesondere Edelstahl vorteilhafterweise mittels Stahlgusses ausgeführt.

In einer bevorzugten Ausführungsform ist die zwischen den beiden Teilen 2, 3 des erfindungsgemäßen Elementes 1 gebildete Führungsöffnung 4 exzentrisch. Diese Exzentrizität erlaubt einen besseren Lauf auf der Absturzsicherung 6 und erlaubt überdies, die Dicke der die Ausnehmung bildenden Teilen 3 zu erhöhen. Die Exzentrizität ist insbesondere vorteilhaft wenn die Achse der Führungsöffnung 4 um 1 mm in vertikaler Richtung nach unten in Richtung des Formschlusses 9, 11 und um 2 mm in vertikaler Richtung zum Spalt 7 hin verschoben ist.

Dieses Element wird für ein Sicherheitssystem verwendet, um Benutzer auf einem Dach oder ähnlichem zu sichern, umfassend mindestens zwei voneinander beabstandete Anschlüssen und zwischen denen eine Absturzsicherung gespannt ist, an der das erfindungsgemäße Element angekoppelt wird, mit den mittels eines Karabiners die Bedienungsperson verbunden wird.

Der Spalt 7 wird verwendet, um Zwischenhalter zu überwinden, die auf der Absturzsicherung oder ähnlichen angeordnet sind. Diese Zwischenschlaufen weisen eine Dicke auf, die kleiner als der Spalt 7 ist. Auf diese Weise ist der Benutzer immer an der Absturzsicherung 6 durch das Gleitelement 1 verbunden. Diese Zwischenhalter können auch zum Beispiel als gekrümmte Schiene ausgebildet sein, um die Verbindung mit dem Sicherheitssystem auch längs Ecken herum und ähnlichem zu erleichtern.

Schließlich ist es klar, dass am bisher beschriebenen Verfahren und Fertigteil Zusätze, Änderungen oder Varianten vorgenommen werden können, die für den Fachmann selbstverständlich sind, ohne damit den durch die beigefügten Patentansprüche gelieferten Schutzbereich zu verlassen.

### Aufstellung der Bezugsziffern

- 1: Gleitelement
- 2,3: Teile des Gleitelementes
- 4: Führungsöffnung
- 5: Ausnehmung für Karabiner
- 6: Absturzsicherung
- 7: Spalt
- 8: Bolzen
- 9: Einbuchtung
- 11: Vorsprung

## Patentansprüche

1. Gleitelement (1) für Sicherheitssysteme, insbesondere für Absturzsicherungssysteme, Fallschutzeinrichtungen, Schienen und ähnliches, das zwei aneinander angelenkte Teile (2,3) aufweist, die eine Führungsöffnung (4) bilden, in die eine Absturzsicherung (6) oder Schiene oder ähnliches aufnehmbar ist und die einen im Wesentlichen zur Achse der Führungsöffnung (4) parallelen Spalt (7) bildet, wobei die beiden Teile (2,3) des Gleitelementes (1) zueinander gegenüber einer zur Achse der Führungsöffnung (4) im Wesentlichen parallelen Achse durch einen Bolzen (8) schwenkbar sind und parallel zur Achse der Führungsöffnung (4) verschiebbar sind und eines der Teile (2, 3) mindestens eine Einbuchtung (9) und das andere Teil mindestens einen mit der Einbuchtung (9) formschlüssig über eine parallel zur Achse der Führungsöffnung (4) erfolgenden Verschiebung kuppelbaren Vorsprung aufweist, wobei jedes Teil (2, 3) eine Ausnehmung (5) zur Aufnahme eines Karabiners aufweist und die Ausnehmung (5) der beiden Teile (2,3) in geschlossener Stellung zwischen dem Bolzen (8) und dem Spalt (7) angeordnet ist, wobei der Vorsprung (11) und die Einbuchtung (9) durch eine geneigte Fläche gegenüber der horizontalen Ebene der Achse der Führungsöffnung (4) gebildet sind und wobei die geneigte Fläche eine Breite von mindestens 1/3 der Breite des Gleitelements (1) im Kupplungsbereich aufweist

2. Gleitelement nach Anspruch 1, **dadurch gekennzeichnet, dass** die zwischen dem ersten (2) und dem zweiten Teil (3) des Gleitelementes (1) gebildete Führungsöffnung (4) exzentrisch ist.

3. Gleitelement nach Anspruch 2, **dadurch gekennzeichnet, dass** die Führungsöffnung (4) exzentrisch ist, indem sie um 1 mm in vertikaler Richtung nach unten in Richtung des Formschlusses(9, 11) und um 2 mm in horizontaler Richtung zum Spalt (7) hin verschoben ist.

4. Gleitelement nach einem der voranstehenden Ansprüche, **dadurch gekennzeichnet, dass** die Neigung der geneigten Flächen größer als 5° gegenüber der horizontalen Ebene der Achse der Führungsöffnung ist.

5. Gleitelement nach einem der voranstehenden Ansprüche, **dadurch gekennzeichnet, dass** das erste (2) und das zweite (3) Teil des Gleitelementes (1) miteinander durch einen Bolzen (8) begrenzten Hubes verbunden sind.

6. Gleitelement nach Anspruch 4, **dadurch gekennzeichnet, dass** am Bolzen (8) ein Federmittel angeordnet ist, um die beiden Teile (2, 3) in Kuppelstellung aufrechtzuerhalten.

7. Gleitelement nach einem der voranstehenden Ansprüche, **dadurch gekennzeichnet, dass** die zwischen den beiden Teilen (2,3) gebildete Führungsöffnung (4) einen Spalt (7) mit zur Öffnungsachse (4) im wesentlichen parallelen Erstreckung aufweist und der Spalt (7) eine Breite aufweist, die kleiner ist als der Durchmesser der in der Führungsöffnung (4) aufgenommenen Absturzsicherung (6) oder Schiene oder ähnliches.

8. Sicherheitssystem umfassend zwei voneinander beabstandete Anschlüsse zwischen denen eine Absturzsicherung gespannt ist, **dadurch gekennzeichnet, dass** mit der Absturzsicherung ein Gleitelement (1) gemäß eines der voranstehenden Ansprüche gekoppelt ist.

9. Sicherheitssystem nach Anspruch 8, **dadurch gekennzeichnet, dass** zwischen den beiden die Absturzsicherung (6) oder Schiene oder ähnliches tragenden Anschlüssen mindestens ein Zwischenhalter angeordnet ist, der die Absturzsicherung (6) oder Schiene oder ähnliches mit einer Breite trägt, die kleiner ist als die Breite des Spaltes.

## Claims

1. A slide member (1) for safety systems, in particular lifelines, fall arrest systems, rails and the like which has two articulated parts (2,3) that form a guide opening (4) for receiving the lifeline (6), rail or the like and a slot (7) substantially parallel to the axis of the guide opening (4), wherein the two parts (2,3) of the slide member (1) are able to be tilted relative to each other about an axis that is substantially parallel to the axis of the guide opening (4) by means of a pivot (8) and to be moved parallel to the axis of the guide opening (4), one of the parts (2,3) has at least one recess (9) and the other part has at least one projection (11) adapted to be geometrically coupled to the recess by a displacement parallel to the axis of the guide opening (4), and each of the parts (2,3) has an opening (5) for receiving a snap hook and the opening (5) of the two parts, in the closed position, is situated between the pivot (8) and the slot (7), and wherein the projection (11) and the recess (9) are formed by a surface that is inclined to the horizontal plane of the axis of the guide opening (4) and wherein said inclined surface has a width that is at least 1/3 the width of the slide member (1) in the coupling zone.

2. A slide member as claimed in claim 1, **characterized in that**, the guide opening (4) formed by the first part (2) and the second part (3) of the slide member (1) is eccentric.

3. A slide member as claimed in claim 2, **characterized in that** the guide opening (4) is eccentric, as it is vertically offset by 1 mm downwards toward of the geometric coupling (9,11) and is horizontally offset by 2 mm toward the slot (7).

4. A slide member as claimed in any of the preceding claims, **characterized in that** the inclination of the inclined surface is greater than 5° relative to the horizontal plane of the axis of the guide opening.

5. A slide member as claimed in any of the preceding claims, **characterized in that** the first part (2) and the second part (3) of the slide member (1) are connected together by means of a limited-range pivot (8).

6. A slide member as claimed in claim 4, **characterized in that** spring means are placed on the pivot (8) to hold the two parts (2,3) in the coupled position.

7. A slide member as claimed in any of the preceding claims, **characterized in that** the guide opening (4) formed between the two parts (2,3) has a slot (7) extending substantially parallel to the axis of the opening (4), and **in that** the slot (7) has a width that is smaller than the diameter of the lifeline (6), rail or the like received in the guide opening (4).

8. A safety system comprising two spaced-apart couplers, with a lifeline stretched therebetween, **characterized in that** said lifeline has a slide member (1) as claimed in any of the preceding claims attached thereto.

9. A safety system as claimed in claim 8, **characterized in that** at least one intermediate holder is interposed between the two couplers that hold the lifeline (6), rail or the like, which holds the lifeline (6), rail or the like and has a smaller width than the slot.

## Revendications

1. Coulisseau (1) pour systèmes de sécurité, notamment lignes de vie, systèmes antichute, rails et similaires comportant deux pièces articulées (2,3) qui forment une ouverture de guidage (4) destinée à recevoir la ligne de vie (6), le rail ou similaires et une fente (7) sensiblement parallèle à l'axe de l'ouverture de guidage (4), dans lequel les deux pièces (2,3) du coulisseau (1) peuvent être orientées l'une par rapport à l'autre autour d'un axe sensiblement parallèle à l'axe de l'ouverture de guidage (4) au moyen d'un pivot (8) et être déplacées parallèlement à l'axe de l'ouverture de guidage (4), l'une des pièces (2,3) possède au moins un évidement (9) et l'autre pièce possède au moins une saillie (11) apte à s'accoupler géométriquement avec l'évidement par un déplacement parallèle à l'axe de l'ouverture de guidage (4), et chacune des pièces (2,3) possède une ouverture (5) destinée à recevoir un mousqueton et l'ouverture (5) des deux pièces, en position fermée, est située entre le pivot (8) et la fente (7), et dans lequel la saillie (11) et l'évidement (9) sont formées par une surface qui est inclinée par rapport au plan horizontal de l'axe de l'ouverture du guidage (4) et dans lequel ladite surface inclinée a une largeur correspondant à au moins 1/3 de la largeur du coulisseau (2) dans la zone d'accouplement.

2. Coulisseau selon la revendication 1, **caractérisé en ce que** l'ouverture de guidage (4) formé par la première (2) et la seconde pièce (3) du coulisseau (1) est excentrique.

3. Coulisseau selon la revendication 2, **caractérisé en ce que** l'ouverture de guidage (4) est excentrique **en ce qu'**elle est décalée d'1 mm verticalement vers le bas vers l'accouplement géométrique (9,11) et de 2 mm horizontalement vers la fente (7).

4. Coulisseau selon n'importe laquelle des revendications précédentes, **caractérisé en ce que** l'inclinaison de la surface inclinée est supérieure à 5° par rapport au plan horizontal de l'axe de l'ouverture de guidage.

5. Coulisseau selon n'importe laquelle des revendications précédentes, **caractérisé en ce que** la première (2) et la seconde pièce (3) du coulisseau (1) sont reliées l'une à l'autre au moyen d'un pivot à course limitée.

6. Coulisseau selon la revendication 4, **caractérisé en ce que** des moyens élastiques sont placées sur le pivot (8) pour maintenir les deux pièces (2,3) dans la position d'accouplement.

7. Coulisseau selon n'importe laquelle des revendications précédentes, **caractérisé en ce que** l'ouverture de guidage (4) formée entre les deux pièces (2,3) possède une fente (7) s'étendant sensiblement parallèle à l'axe de l'ouverture (4), et **en ce que** la fente (7) a une largeur inférieure au diamètre de la ligne de vie (6), du rail ou similaire reçu dans l'ouverture de guidage (4).

8. Système de sécurité comprenant deux attelages espacés entre lesquels est tendue une ligne de vie, **caractérisé en ce qu'**un coulisseau (1) selon l'une des revendications précédentes est fixé sur ladite ligne de vie.

9. Système de sécurité selon la revendication 8, **caractérisé en ce qu'**au moins un élément de support intermédiaire est interposé entre les deux attelages portant la ligne de vie (6), le rail ou similaire, qui porte la ligne de vie (6), le rail ou similaire e a une largeur inférieure à la largeur de la fente.
